(19) Europäisches Patentamt

European Patent Office

Office européen des brevets

(11) **EP 3 230 640 B1**

(12) **FASCICULE DE BREVET EUROPEEN**

(45) Date de publication et mention
de la délivrance du brevet:
**12.08.2020 Bulletin 2020/33**

(21) Numéro de dépôt: **15823629.9**

(22) Date de dépôt: **09.12.2015**

(51) Int Cl.:
*B21F 15/00* $^{(2006.01)}$ *F16L 33/01* $^{(2006.01)}$

(86) Numéro de dépôt international:
**PCT/FR2015/053395**

(87) Numéro de publication internationale:
**WO 2016/092214 (16.06.2016 Gazette 2016/24)**

(54) **PROCEDE DE MONTAGE D'UN EMBOUT DE CONNEXION D'UNE CONDUITE TUBULAIRE FLEXIBLE ET DISPOSITIF PERMETTANT DE METTRE EN OEUVRE CE PROCEDE**

VERFAHREN ZUR MONTAGE EINES ANSCHLUSSENDSTÜCKS EINER ROHRFÖRMIGEN FLEXIBLEN LEITUNG UND VORRICHTUNG ZUR UMSETZUNG DES VERFAHRENS

METHOD FOR MOUNTING A CONNECTING END PIECE OF A TUBULAR FLEXIBLE PIPE, AND DEVICE FOR IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2014 FR 1402826**

(43) Date de publication de la demande:
**18.10.2017 Bulletin 2017/42**

(73) Titulaire: **Technip France
92400 Courbevoie (FR)**

(72) Inventeurs:
• **COLMARD, Antoine
76190 Etoutteville (FR)**
• **PECKEU, Grégory
27310 Bourg-Achard (FR)**
• **BOUVIER, Michael
76190 Yvetot (FR)**

(74) Mandataire: **Fédit-Loriot
38, avenue Hoche
75008 Paris (FR)**

(56) Documents cités:
**WO-A1-2014/170644 GB-A- 2 346 575
US-A- 1 211 020 US-A1- 2013 091 921**

**Description**

La présente invention concerne un procédé de montage d'un embout de connexion d'une conduite tubulaire flexible pour le transport d'un fluide en milieu marin. Elle concerne plus particulièrement une conduite flexible de type non lié («unbonded » en anglais) utilisée pour l'exploitation offshore de gisements pétroliers et gaziers. L'invention concerne également un dispositif permettant de mettre en œuvre ce procédé de montage.

Ces conduites flexibles, qui sont formées d'un ensemble de différentes couches concentriques et superposées, sont dites de type non lié dès lors que ces couches présentent une certaine liberté de se déplacer les unes par rapport aux autres.

Ces conduites flexibles satisfont, entre autres, aux recommandations des documents normatifs. API 17J « Spécification for Unbonded Flexible Pipe » et API RP 17B « Recommended Practice for Flexible Pipe » établis par l'Américain Petroleum Institute.

D'une manière générale, les couches constitutives de ces conduites comprennent notamment des gaines en matériau polymère assurant généralement une fonction d'étanchéité, et des couches de renfort destinées à la reprise des efforts mécaniques et formées par des enroulements de feuillards, de fils métalliques, de bandes diverses ou de profilés en matériaux composites.

Les conduites flexibles de type non-lié les plus utilisées pour l'exploitation offshore de gisements pétroliers et gaziers comprennent généralement, de l'intérieur vers l'extérieur, une carcasse interne constituée d'un feuillard agrafé qui sert à empêcher l'écrasement de la conduite sous l'effet de la pression externe, une gaine polymérique interne, une voûte de pression constituée d'au moins un fil métallique de forme agrafé et enroulé hélicoïdalement à pas court, ladite voûte de pression servant à reprendre les efforts radiaux liés à la pression interne, au moins une nappe d'armures de traction formée d'enroulements hélicoïdaux à pas long de fils métalliques ou composites, ladite ou lesdites nappes d'armures servant à reprendre les efforts longitudinaux que subit la conduite, et une gaine polymérique externe destinée à protéger de l'eau de mer les couches de renfort.

Ce genre de conduite est du type à passage non lisse (« rough-bore » en anglais) en raison de la géométrie de la carcasse interne qui constitue la couche la première couche en partant de l'intérieur. Alternativement, la conduite peut être du type à passage lisse (« smooth-bore » en anglais) dans le cas où elle ne comporte pas de carcasse interne, la première couche en partant de l'intérieur étant dans ce cas une gaine d'étanchéité lisse en matériau polymérique.

Les conduites tubulaires flexibles comportent, à chaque extrémité, un embout de connexion destiné à assurer le raccordement des conduites entres elles ou avec des équipements terminaux. Ces embouts de connexion assurent plusieurs fonctions qui sont notamment l'ancrage des armures de traction ainsi que l'étanchéité des extrémités libres des différentes gaines polymériques. Les fonctions d'étanchéité sont généralement assurées par des moyens de sertissage des extrémités des gaines.

Un tel embout de connexion est notamment décrit dans le document WO03/004921. Il comporte une voûte d'extrémité reliée par des premiers moyens de sertissage à la gaine de pression interne et un capot cylindrique prolongeant cette voûte et relié par des deuxièmes moyens de sertissage à la gaine externe. La voûte et le capot déterminent une chambre annulaire dans laquelle s'étendent les extrémités libres des armures de traction. Les fils constituant les armures de traction sont déployés dans la chambre annulaire au-dessus des premiers moyens de sertissage. Cette chambre annulaire est remplie d'un matériau de remplissage formé d'une résine de type époxy assurant l'ancrage des armures de traction.

Un moyen de blocage du type crochet est formé à l'extrémité de chaque fil d'armure de traction et ce crochet, lorsqu'il est pris dans la résine, assure un blocage mécanique s'opposant aux efforts d'arrachement de la conduite. Ce moyen de blocage n'est cependant pas capable à lui seul de résister durablement aux sollicitations en traction, notamment parce que les caractéristiques mécaniques des armures sont généralement plus basses au niveau du crochet qu'en pleine longueur, ceci en raison du procédé de fabrication du crochet.

Afin de réduire le niveau de tension au niveau de chaque crochet, on utilise les frottements entre les fils d'armure et la résine, ainsi que l'effet cabestan. En effet, la trajectoire de chaque fil d'armure entre d'une part son point d'entrée dans la résine au niveau de l'arrière de l'embout et d'autre part le crochet n'est pas une droite. On obtient ainsi une retenue additionnelle par effet cabestan.

Lorsque la conduite flexible est en service, la tension moyenne au niveau de l'embout peut atteindre plusieurs centaines de tonnes, notamment au niveau de l'embout supérieur d'une conduite montante (« riser » en anglais) déployée entre d'une part un fond marin situé à grande profondeur et d'autre part un support flottant de production situé en surface. En effet dans cette configuration, la tension d'arrachement exercée sur l'embout supérieur est fonction du poids total de la conduite montante, poids qui peut atteindre une valeur considérable dans le cas des grandes profondeurs (1500 mètres et plus).

En outre, cette tension d'arrachement n'est pas constante car elle varie en fonction des mouvements verticaux du support flottant de production sous l'effet de la houle. Les variations de tension associées à la houle peuvent atteindre plusieurs dizaines de tonnes, et se répéter un très grand nombre de fois pendant toute la durée de vie de l'installation.

Ce chargement peut générer un phénomène de fatigue du système d'ancrage des armures, phénomène auquel l'embout doit pouvoir durablement résister.

La fabrication des embouts nécessite de plier puis de déplier chaque fil d'armure de traction au cours du montage de l'embout. Ces opérations de pliage et de dépliage sont effectuées manuellement par un opérateur, sans outillage particulier, ce qui pose plusieurs problèmes.

Le document WO2014/170644 divulgue une méthode d'assemblage d'un embout et une conduite flexible, où les fils d'armure sont faiblement courbés. Les documents US1211020A, US2013/091921 et GB2346575 divulguent des moyens de torsion des câbles et de pliage des fils métalliques.

Le premier problème est un problème de pénibilité. En effet, pour s'adapter aux profondeurs croissantes, les conduites comportent des fils d'armure de plus en plus gros et de plus en plus résistants. Aujourd'hui, certaines conduites flexibles comportent des fils d'armure de section rectangulaire 20 mm par 5 mm et de limite à la rupture de 1400 MPa. De tels fils sont particulièrement difficiles à plier à la main.

Le deuxième problème est le manque de reproductibilité du pliage manuel, et le risque associé de plier et d'écrouir excessivement certains fils. En effet, la zone de pliage des fils au cours du montage de l'embout se situe au niveau de la partie arrière de l'embout, c'est-à-dire au niveau de la transition entre la conduite flexible et la zone d'encastrement des armures. Or, cet emplacement est critique vis-à-vis du phénomène de fatigue du système d'ancrage des armures. En effet, au sein de la conduite et à distance de l'embout les fils d'armure sont relativement libres de se déplacer latéralement pour accommoder les variations de tension, alors qu'à l'intérieur de l'embout ces fils sont totalement bloqués latéralement. Cette différence de raideur a pour effet d'engendrer des concentrations de contrainte dans les fils d'armure au niveau de la partie arrière de l'embout. Or, l'écrouissage appliqué aux fils d'armure lors des opérations de pliage et de dépliage a pour inconvénient de réduire localement la résistance à la fatigue des fils. Cet écrouissage étant effectué dans une zone critique du point de vue des sollicitations en fatigue, il convient de le contrôler et de le limiter pour garantir la résistance en fatigue de l'embout de connexion.

Afin d'éviter d'écrouir excessivement les fils lors de l'étape de pliage des fils d'armures, le document WO03/004921 enseigne une solution consistant à monter autour de la conduite un collier permettant de garantir la valeur minimale du rayon de pliage appliqué aux fils. Cette solution n'est cependant pas totalement satisfaisante, notamment car elle ne permet pas de contrôler de façon suffisamment précise la reproductibilité de l'écrouissage.

L'invention a donc pour but de proposer une méthode de montage d'un embout de connexion qui évite ces inconvénients. A cet effet, l'invention a pour objet une méthode de selon la revendication 1

a) on fournit une conduite flexible comportant une extrémité de conduite sur laquelle l'embout de connexion doit être monté,

b) on forme un tronçon de conduite dénudé au niveau de ladite extrémité de conduite en retirant la ou les couches externes entourant ladite au moins une nappe d'armures de traction,

c) on plie vers l'arrière de la conduite flexible chaque fil d'armure de ladite au moins une nappe d'armures de traction en appliquant à chaque fil d'armure une force F de pliage,

d) on raccorde ledit embout de connexion à ladite extrémité de conduite, cette méthode de montage étant caractérisée en ce que pendant l'étape c) ladite force de pliage F est appliquée à chaque fil d'armure par l'intermédiaire d'un outil d'application apte à glisser le long du fil et en ce que pendant l'étape c) le point d'application P de ladite force de pliage F se déplace continument le long dudit fil d'armure.

La méthode de montage selon l'invention peut en outre comprendre une ou plusieurs des caractéristiques suivantes, prises isolément ou suivant toute(s) les combinaison(s) techniquement possible(s) :

- pendant l'étape c), la distance curviligne entre d'une part ledit point d'application P de ladite force de pliage F et d'autre part l'extrémité dudit fil d'armure augmente, ladite distance curviligne étant mesurée le long du fil d'armure,
- pendant l'étape c), la position angulaire $\alpha$ dudit point d'application P varie de façon monotone en fonction du temps, ladite position angulaire $\alpha$ étant mesurée dans un plan perpendiculaire à l'axe longitudinal A-A' de ladite conduite flexible,
- pendant l'étape c), l'amplitude de variation de ladite position angulaire $\alpha$ dudit point d'application P est comprise entre 120 degrés et 360 degrés,
- pendant l'étape c), la position axiale z dudit point d'application P varie de façon monotone en fonction du temps, ladite position axiale z étant mesurée parallèlement à l'axe longitudinal A-A' de ladite conduite flexible,
- pendant l'étape c), l'amplitude de variation de ladite position axiale z dudit point d'application P est comprise entre le tiers et le double du pas d'hélice H du fil d'armure au sein de la conduite flexible,
- pendant l'étape c), la position radiale r dudit point d'application P varie en fonction du temps selon une courbe comportant d'abord une phase d'augmentation de ladite position radiale r jusqu'à une valeur maximale suivie ensuite d'une phase de diminution de ladite position radiale r, ladite position radiale r étant égale à la distance séparant ledit point d'application P de l'axe longitudinal A-A'.

L'invention a aussi pour objet un dispositif permettant de mettre en œuvre cette méthode de montage d'un embout de connexion. Ce dispositif permettant de plier vers l'arrière un fil d'armure d'une conduite tubulaire flexible d'axe longitudinal A-A' est caractérisé en ce qu'il comporte un outil d'application d'une force de pliage F à un fil d'armure, et des moyens mécaniques de déplacement de l'outil d'application, ledit outil d'application comportant des moyens de guidage permettant audit outil d'application de glisser le long dudit fil d'armure pendant l'application de la force de pliage F.
Ce dispositif selon la revendication 7 peut en outre comprendre une ou plusieurs des caractéristiques suivantes, prises isolément ou suivant toute(s) les combinaison(s) techniquement possible(s) :

- lesdits moyens de guidage laissent ledit outil d'application libre de tourner autour dudit fil d'armure pendant l'application de la force de pliage F,
- ledit outil d'application comporte une pince entourant le fil d'armure,
- lesdites liaisons mécaniques motorisées sont des liaisons de type glissière ou de type pivot,
- lesdits moyens mécaniques de déplacement comportent une liaison mécanique motorisée de type pivot d'axe de rotation sensiblement confondu avec l'axe longitudinal A-A' de ladite conduite tubulaire flexible,
- lesdits moyens mécaniques de déplacement comportent six desdits éléments et cinq desdites liaisons mécaniques, deux desdites cinq liaisons mécaniques étant des liaisons mécaniques non motorisées de type pivot,
- lesdits moyens mécaniques de déplacement sont un robot de co-manipulation piloté par un opérateur.

L'invention sera mieux comprise à la lecture de la description qui va suivre, donnée uniquement à titre d'exemple et faite en se référant aux dessins annexés, sur lesquels :

- la figure 1 est une vue en perspective et partielle d'une conduite tubulaire flexible utilisée pour l'exploitation offshore de gisements pétroliers et gaziers,
- la figure 2 est une vue schématique en coupe axiale d'un embout de connexion d'une conduite tubulaire flexible,
- les figures 3 à 8 sont des vues schématiques et partielles en perspective de plusieurs étapes successives de pliage d'un des fils des nappes d'armures de traction, selon une méthode conforme à l'invention,
- la figure 9 est une vue schématique et partielle en perspective d'un outil d'application d'une force de pliage conforme à l'invention,
- les figures 10 et 11 sont des vues schématiques et partielles de coté de deux dispositifs permettant de mettre en œuvre le procédé conforme à la présente invention.

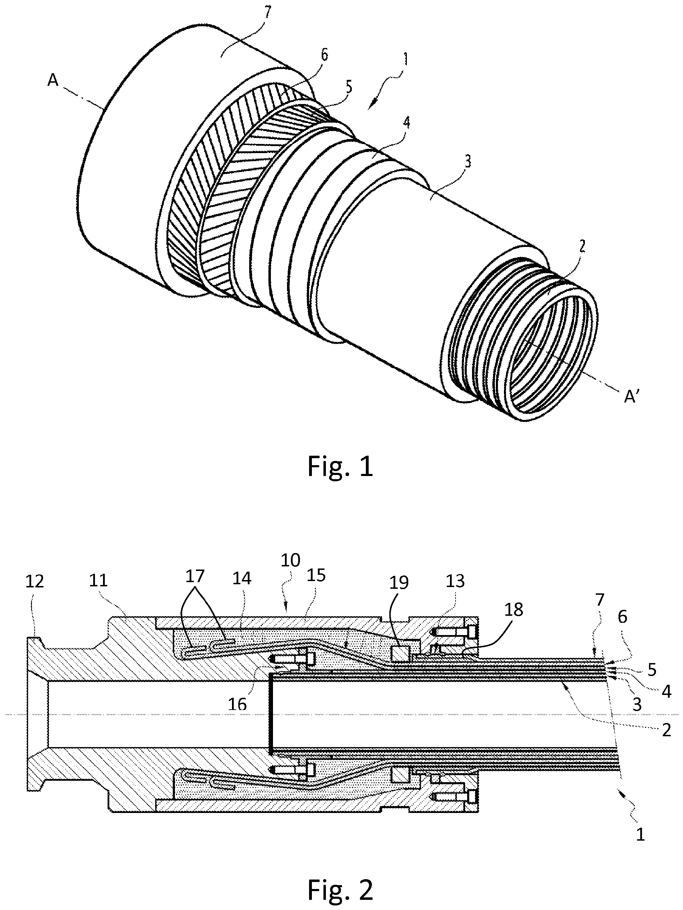

Sur la figure 1, on a représenté partiellement une conduite tubulaire flexible 1 destinée à l'exploitation pétrolière offshore, et plus particulièrement au transport de produits pétroliers ou de gaz.
Elle est du type non lié et répond aux spécifications définies dans les documents normatifs API 17J et API RP 17B.
Dans l'exemple de réalisation représenté sur cette figure, la conduite tubulaire flexible 1 d'axe longitudinal A-A' comprend de l'intérieur à l'extérieur :

- une carcasse interne 2 constituée d'une bande métallique enroulée, profilée et agrafée selon une hélice à pas court, plus typiquement avec un angle d'hélice compris entre 70 et 90° et destinée à la résistance à l'écrasement sous l'effet de la pression externe appliquée à la conduite,
- une gaine de pression 3, encore appelée gaine interne 3 et réalisée par extrusion d'un matériau polymère,
- une voûte de pression 4 constituée d'au moins un fil métallique par exemple agrafé, enroulé hélicoïdalement à pas court, typiquement avec un angle d'hélice compris entre 70 et 90°, et assurant la résistance à la pression interne dans la conduite 1,
- au moins une nappe d'armures de traction et dans l'exemple de réalisation représenté à la figure 1, deux nappes croisées d'armures de traction 5 et 6 constituées de fils métalliques enroulés en hélice à pas long typiquement selon des angles compris entre 20 et 55° et,
- une gaine d'étanchéité externe 7, encore appelée gaine externe 7, constituée d'un matériau polymère et formant une protection externe de la conduite 1.

La conduite tubulaire flexible 1, comporte, à chacune de ses extrémités un embout de connexion 10 représenté à la figure 2 et destiné à assurer le raccordement des conduites entre elles ou avec des équipements terminaux. Ces embouts doivent être réalisés dans des conditions assurant à la fois une bonne solidarisation et une bonne étanchéité.
L'embout de connexion 10 assure plusieurs fonctions qui sont notamment l'ancrage des nappes d'armures de traction 5 et 6, ainsi que le sertissage et l'étanchéité des extrémités libres des différentes gaines d'étanchéité en matériau polymère 3 et 7 notamment.

D'une manière générale, l'embout 10 comprend une voûte d'extrémité 11 comportant une bride d'extrémité 12 destinée à la fixation sur un autre embout de connexion ou à des équipements terminaux. Cette voûte d'extrémité 11 présente un diamètre interne sensiblement égal au diamètre interne de la carcasse interne 2 de la conduite 1. L'alésage central de la voûte est disposé à côté de l'extrémité libre de la carcasse interne 2, coaxialement à cette dernière, selon un axe A-A', de façon à assurer un écoulement continu des fluides entre la conduite 1 et l'embout 10.

L'embout 10 comporte des moyens de sertissage 16 de la gaine de pression 3 disposés entre la voûte d'extrémité 11 et l'extrémité de la gaine de pression 3.

L'embout de connexion 10 comporte également un capot cylindrique 15 prolongeant la voûte d'extrémité 11. Des moyens de sertissage 13 de la gaine externe 7 sont disposés entre le capot cylindrique 15 et l'extrémité de la gaine externe 7. Les moyens de sertissage 13 de la gaine externe 7 comprennent une canule métallique 18 insérée entre la gaine externe 7 et la nappe externe d'armures 6.

La voûte 11 et le capot 15 déterminent une chambre annulaire 14 dans laquelle s'étendent les extrémités des nappes d'armures de traction 5 et 6. La chambre annulaire 14 est remplie d'un matériau de remplissage formé d'une résine thermodurcissable du type époxy assurant l'ancrage des extrémités des armures 5 et 6.

L'extrémité de chaque fil d'armure des nappes d'armures de traction 5, 6 est munie d'un crochet 17 formant un moyen de blocage des fils d'armure au sein de la résine époxy. Selon d'autres modes de réalisation non représentés, le moyen de blocage dont est muni l'extrémité de chaque fil d'armure de traction est une déformation en forme de vague ou de torsade, ou encore une augmentation locale de la section du fil obtenue par soudage d'une pièce rapportée.

La méthode de montage d'un tel embout 10 comporte les étapes suivantes :

- On forme un tronçon dénudé au niveau de l'extrémité de la conduite flexible 1 et en retirant la ou les couches externes entourant la nappe externe d'armures de traction 6. A cet effet, on découpe puis on retire notamment la gaine externe 7, sur une longueur avantageusement comprise entre un à deux mètres en partant de l'extrémité de la conduite flexible 1, afin de dégager les extrémités des nappes d'armures de traction 5,6.
- On introduit la canule 18 sous l'extrémité découpée de la gaine externe 7.
- On retourne successivement les deux nappes d'armures 5,6 en pliant un par un les fils vers l'arrière pour dégager localement les couches situées à l'intérieur des nappes d'armures 5,6.
- On raccorde la voûte d'extrémité 11 au noyau constitué par la carcasse interne 2, la gaine de pression 3 et la voûte de pression 4, en assurant notamment la mise en place des moyens de sertissage 16 de la gaine de pression 3. Cette étape se fait d'une manière connue qu'il n'est pas nécessaire de préciser car la présente invention ne porte pas sur ce point particulier.
- On déplie les deux nappes d'armures 5,6 vers l'avant pour les disposer autour de la voûte d'extrémité 11.
- On déforme en forme de crochet 17 l'extrémité de chaque fil d'armure des nappes 5,6 d'armures.
- On fixe le capot 15 sur la voûte d'extrémité 11.
- On met en place les moyens de sertissage 13 de la gaine externe 7.
- On remplit la chambre annulaire 14 d'une résine thermodurcissable du type époxy.

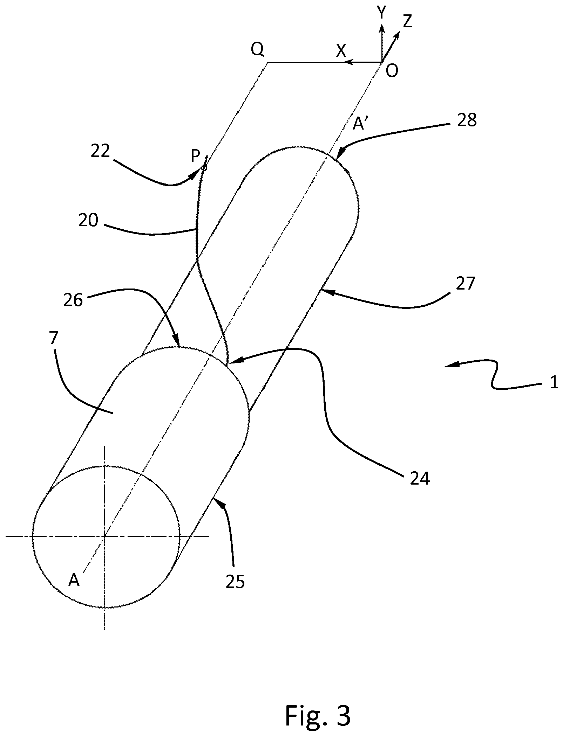

Les figures 3 à 8 illustrent plusieurs phases successives de l'opération de pliage vers l'arrière d'un des fils d'armure de traction 20 de la nappe externe d'armures 6, selon un procédé conforme à la présente invention. La gaine externe 7 de la conduite flexible 1 a été découpée selon un plan de coupe 26 perpendiculaire à l'axe longitudinal A-A' de la conduite 1, ce plan de coupe 26 étant avantageusement situé à une distance comprise entre un et deux mètres par rapport à l'extrémité de conduite 28. La gaine externe 7 a aussi été retirée de façon à dégager la nappe externe d'armures 6 sur un tronçon de conduite dénudé 27 de longueur avantageusement comprise entre un et deux mètres.

Le fil d'armure 20 est dégagé et accessible le long du tronçon de conduite dénudé 27. De plus, le fil d'armure 20 reste bloqué sous la gaine externe 7 le long du reste de la conduite flexible 1, c'est-à-dire le long du tronçon de conduite non dénudé 25. Lors du pliage du fil d'armure 20, le point de transition 24 du fil 20 entre le tronçon de conduite dénudé 27 et le tronçon de conduite non dénudé 25 peut être considéré comme un point fixe d'encastrement du fil 20 au sein de la conduite flexible 1.

Le fil d'armure 20 est ensuite plié vers l'arrière c'est-à-dire en s'éloignant de l'extrémité de conduite 28. Dans la présente demande le terme « vers l'arrière » signifie en direction du milieu de la conduite, le milieu de la conduite étant situé à distance égale des deux extrémités de la conduite. Le terme « vers l'avant » signifie quant à lui en direction de l'extrémité la plus proche.

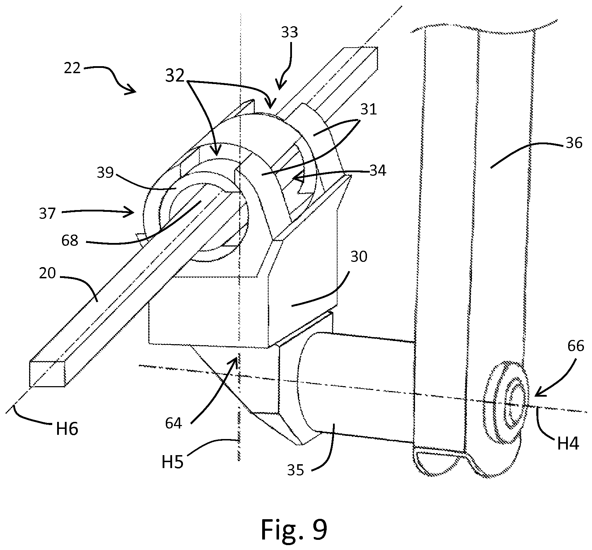

Afin de plier vers l'arrière le fil d'armure 20, une force de pliage F est appliquée localement sur le fil 20 au niveau du point d'application P comme représenté sur la figure 3. La force de pliage F est appliquée par l'intermédiaire d'un outil d'application 22 apte à glisser le long du fil 20. Cet outil d'application 22, que l'on décrira plus en détail dans la suite de la description en référence à la figure 9, comporte par exemple une pince entourant le fil 20. La pince permet d'emprisonner le fil d'armure 20, lequel est alors libre en translation. Cet outil d'application 22 est déplacé dans l'espace par des moyens mécaniques de déplacement non représentés sur les figures 3 à 8. Ces moyens mécaniques de déplacement fournissent la force F nécessaire pour plier le fil d'armure 20, cette force F étant transmise au fil 20 par l'intermédiaire de l'outil d'application 22. Lors du pliage du fil d'armure 20, le point d'application P de la force de pliage F se déplace continument le long du fil comme représenté sur les figures 3 à 8.

Du fait de cette caractéristique, la présente invention se distingue de la pratique antérieure. En effet, selon la pratique antérieure, lorsqu'un opérateur pliait manuellement le fil 20, il le prenait directement avec sa main et il ne faisait pas glisser sa main le long du fil 20 pendant l'opération de pliage. Au contraire, pour pouvoir appliquer une force F de pliage importante telle que celle nécessaire pour plier un fil 20 de forte section, l'opérateur devait serrer fortement le fil 20 de sorte que tout glissement de sa main le long du fil 20 était rendu impossible.

Une autre raison pour laquelle l'opération manuelle selon la pratique antérieure se faisant sans glissement continu du point d'application de la force F est que le fil 20 se comporte comme un ressort lorsqu'il est fléchi et qu'il a tendance à se redresser du fait du retour élastique. L'opérateur devait donc maintenir en permanence le fil 20 pendant toute la durée du pliage jusqu'à son immobilisation finale, faute de quoi il aurait risqué d'être blessé.

Or, il a été découvert que, de façon surprenante, le fait de déplacer continument le point d'application P de la force F de pliage le long du fil d'armure 20 permet d'améliorer la qualité du pliage du fil d'armure 20, en évitant notamment un écrouissage excessif du fil 20 au niveau de la zone critique située au voisinage du point de transition 24. La zone critique est une zone de pliage du fil d'armure. Afin de mettre en œuvre ce procédé de pliage, il est nécessaire que la force F de pliage fournie par les moyens mécaniques de déplacement soit transmise au fil 20 par l'intermédiaire d'une pièce montée librement coulissante le long du fil 20, ce qui est le cas de l'outil d'application 22.

Dans la présente demande, le terme point d'application signifie en fait le milieu du tronçon d'application, le tronçon d'application étant le tronçon du fil d'armure 20 qui est en contact avec l'outil d'application 22, la force F de pliage étant transmise de l'outil d'application 22 au fil d'armure 20 grâce à ce contact réparti le long du tronçon d'application. La longueur du tronçon d'application est très inférieure à la longueur totale du fil d'armure 20 qui a été dégagée le long du tronçon de conduite dénudé 27, typiquement au moins quinze fois inférieure. La force F de pliage est donc appliquée le long d'un tronçon d'application de courte longueur par rapport à la longueur totale du fil d'armure 20, ce qui justifie l'emploi du terme point d'application.

En outre avantageusement, le fil reste libre de tourner autour de son axe longitudinal au niveau du point d'application P, le contact entre le fil d'armure 20 et l'outil d'application 22 ne bloquant pas cette rotation. Ainsi, dans ce mode avantageux, la liaison mécanique entre le fil d'armure 20 et l'outil d'application 22 présente deux degrés de liberté, à savoir d'une part un premier degré de liberté en translation parallèlement à l'axe longitudinal du fil d'armure 20 au niveau du point d'application P, ce premier degré de liberté permettant à l'outil d'application 22 de glisser le long du fil d'armure 20 pendant le pliage, et d'autre part un deuxième degré de liberté en rotation autour de l'axe longitudinal du fil d'armure 20 au niveau du point d'application P, ce deuxième degré de liberté permettant au fil d'armure 20 de tourner par rapport à l'outil d'application 22 pendant le pliage. Ainsi, par exemple, cette liaison mécanique est une liaison de type pivot glissant. Ce deuxième degré de liberté en rotation a pour effet d'éviter d'appliquer au fil d'armure (20) des contraintes inutiles de torsion pendant le pliage, ce qui réduit l'écrouissage subi par le fil d'armure (20) pendant le pliage.

En outre, avantageusement, la distance curviligne entre d'une part le point d'application P de la force de pliage F et d'autre part l'extrémité 29 du fil d'armure 20 augmente pendant l'opération de pliage, le point d'application P s'éloignant progressivement de l'extrémité 29 et se rapprochant progressivement du point de transition 24. Cette distance curviligne est mesurée le long du fil d'armure 20. Autrement dit, lors de l'étape de pliage, le point d'application P de la force de pliage F se rapproche de la zone de pliage.

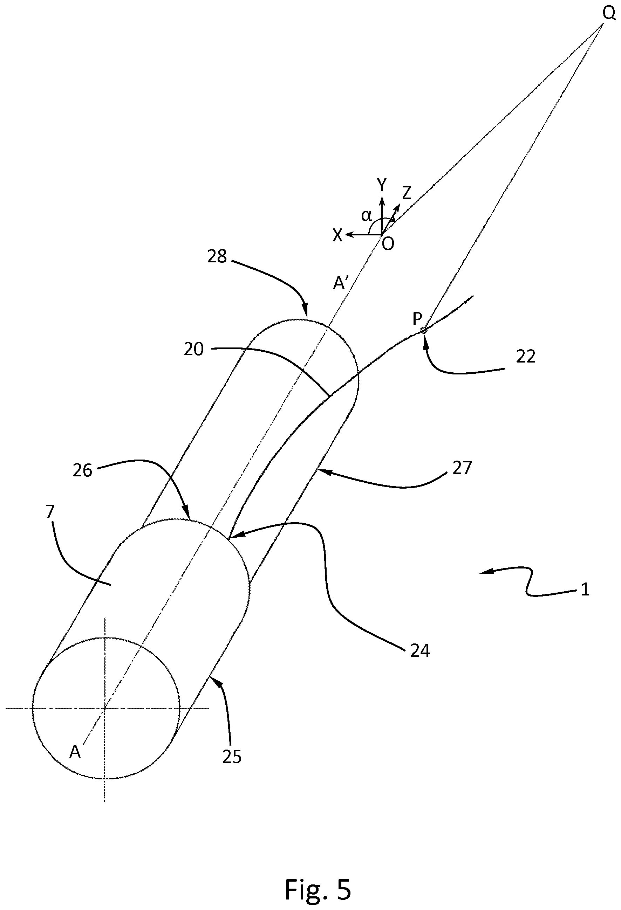

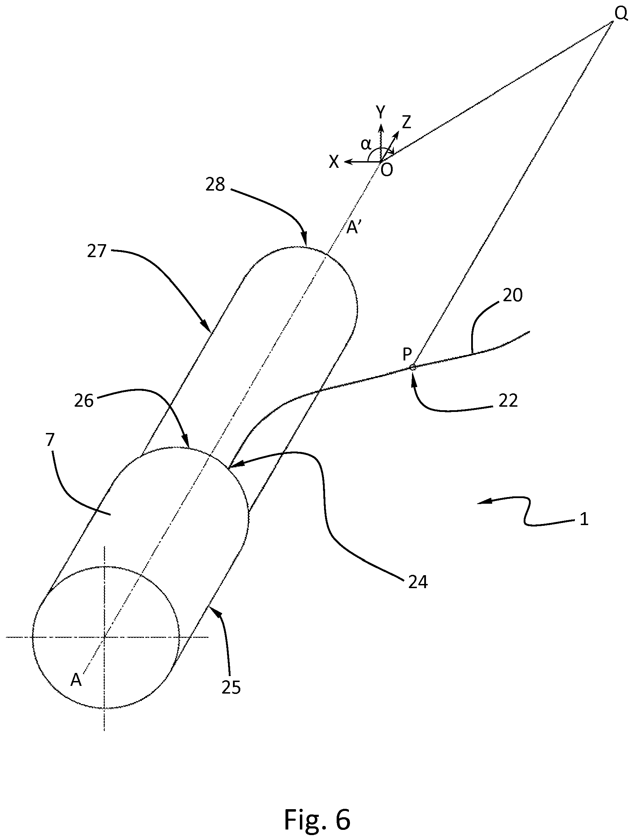

Cette variante avantageuse est représentée sur les figures 3 à 8. La distance curviligne séparant le point d'application P de l'extrémité 29 augmente d'abord lentement (figures 3 et 5) pendant la phase où le fil 20 est écarté de l'axe longitudinal A-A', puis plus rapidement quand le fil 20 est rabattu et plaqué vers l'arrière (figures 6 à 8). Cette caractéristique a pour effet bénéfique d'éviter de fléchir excessivement le fil 20 au voisinage du point de transition 24. Selon cette variante, le pliage commence avec un grand bras de levier puisque la force F est initialement appliquée loin du point d'encastrement 24 et ce bras de levier est ensuite réduit progressivement au fur et à mesure que le fil 20 est plié, puisque le point d'application de la force F se rapproche ensuite du point d'encastrement 24. Ce raccourcissement progressif du bras de levier permet d'éviter de concentrer excessivement les déformations au voisinage du point d'encastrement 24, contrairement à ce que l'on aurait obtenu en conservant un bras de levier fixe.

Pendant le pliage, la force de pliage F peut varier en intensité et en direction en fonction notamment de la trajectoire du point d'application P.

Un repère cartésien (OXYZ) a été représenté sur les figures 3 à 8. L'origine O de ce repère est située sur l'axe longitudinal A-A' de la conduite flexible 1. La conduite flexible 1 étant avantageusement parallèle au sol pendant l'opération de pliage, l'axe A-A' est horizontal. Le vecteur Z est parallèle à l'axe A-A'. Le vecteur X est horizontal et perpendiculaire à l'axe A-A'. Le vecteur Y est vertical et perpendiculaire aux vecteurs X et Z ainsi qu'à l'axe A-A'.

Dans le repère cartésien (OXYZ), le point d'application P de la force de pliage F a pour coordonnées (x, y, z). Ce point d'application P est situé au niveau de la zone de contact entre le fil d'armure 20 et l'outil d'application 22. On désigne par Q la projection du point P sur le plan (OXY) parallèlement au vecteur Z. On désigne par $\alpha$ l'angle entre les vecteurs X et OQ. $\alpha$ est la position angulaire du point d'application P, telle que mesurée dans le plan (OXY) perpendiculaire à l'axe longitudinal A-A'.

On désigne par r la position radiale du point d'application P, la position radiale r étant égale à la distance séparant le point d'application P de l'axe longitudinal A-A'. La position radiale r est aussi égale à la distance séparant les points O et Q. Les coordonnées x et y du point d'application P sont fonction de la position angulaire $\alpha$ et de la position radiale r selon les équations suivantes :

$$x = r \cdot \cos(\alpha)$$

$$y = r \cdot \sin(\alpha)$$

La coordonnée z du point d'application P est appelée position axiale du point d'application P. La position axiale z est mesurée parallèlement à l'axe longitudinal A-A' de la conduite.

La figure 3 correspond au début de l'opération de pliage. Lorsque la gaine externe 7 est retirée pour former le tronçon dénudé 27, les nappes d'armures de traction 5, 6 ont tendance à gonfler. Ce gonflement est lié au retour élastique des fils d'armure en raison d'une préformation imparfaite des fils d'armure lors de la fabrication des nappes d'armures de traction 5, 6. Dans le cas idéal d'une préformation parfaite, ce gonflement serait nul et les nappes d'armures 5, 6 conservaient le long du tronçon dénudé 27 une géométrie identique à celles qu'elles ont le long du tronçon non dénudé 25. En pratique, la préformation est imparfaite et les fils d'armure gonflent en suivant une trajectoire du type hélice sur cône dès lors que les couches externes entourant les nappes d'armures 5, 6 ont été retirées.

Ce gonflement est souvent accompagné d'une augmentation du pas d'hélice, le pas moyen de l'hélice décrite par le fil d'armure 20 au niveau du tronçon dénudé 27 devenant alors supérieur au pas de l'hélice décrite par le fil d'armure 20 au niveau du tronçon non dénudé 25. Dans le cas où la préformation est médiocre, le pas moyen de l'hélice décrite par le fil d'armure 20 au niveau du tronçon dénudé 27 peut parfois doubler par rapport au pas de l'hélice décrite par le fil d'armure 20 au niveau du tronçon non dénudé 25.

Du fait de ce gonflement, l'extrémité 29 du fil d'armure 20 n'est généralement pas en contact avec les couches sous-jacentes de la conduite 1, contrairement au point de transition 24 qui lui est en contact avec ces couches sous-jacentes. Par suite, grâce à ce gonflement, l'outil d'application 22 peut facilement être installé autour du fil 20 à proximité de l'extrémité 29, par exemple à une distance de l'extrémité 29 comprise entre dix et cinquante centimètres.

Une fois mis en place l'outil d'application 22 ainsi que les moyens mécaniques de déplacement de cet outil, le pliage du fil d'armure 20 peut commencer. Les moyens mécaniques de déplacement font alors décrire à l'outil d'application 22 une trajectoire tridimensionnelle en appliquant simultanément au fil d'armure 20 via l'outil d'application 22 une force de pliage F dont l'intensité et la direction varient pendant le déplacement de l'outil d'application 22.

En outre, avantageusement, la trajectoire du point d'application P est telle que la position angulaire $\alpha$ varie de façon monotone en fonction du temps pendant le pliage du fil d'armure 20. Le terme « varie de façon monotone en fonction de temps» signifie que la grandeur considérée ou bien augmente en fonction du temps, ou bien diminue en fonction du temps. Dans le mode de réalisation représenté sur les figures 3 à 8, la position angulaire $\alpha$ augmente pendant le pliage du fil d'armure 20.

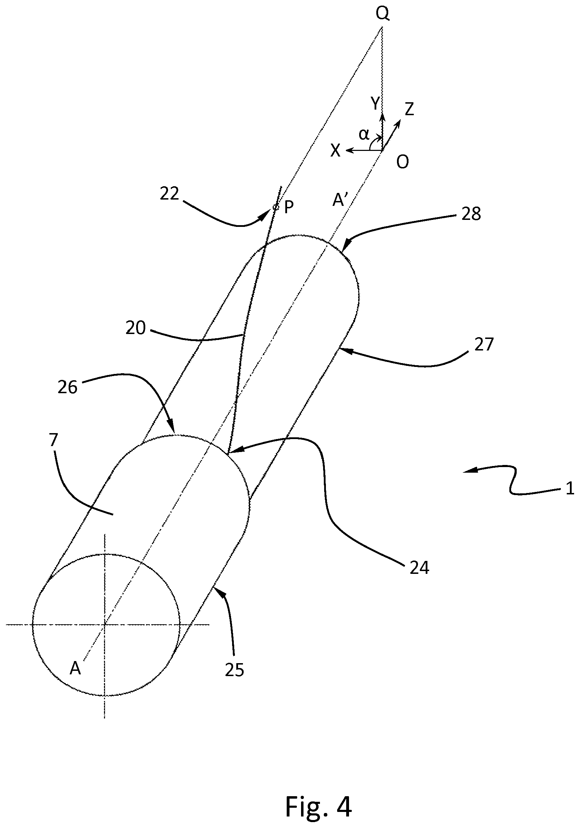

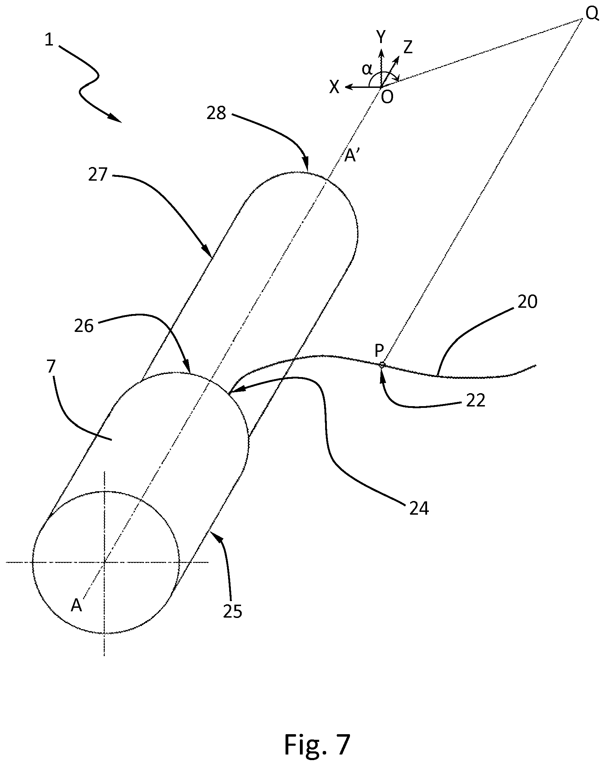

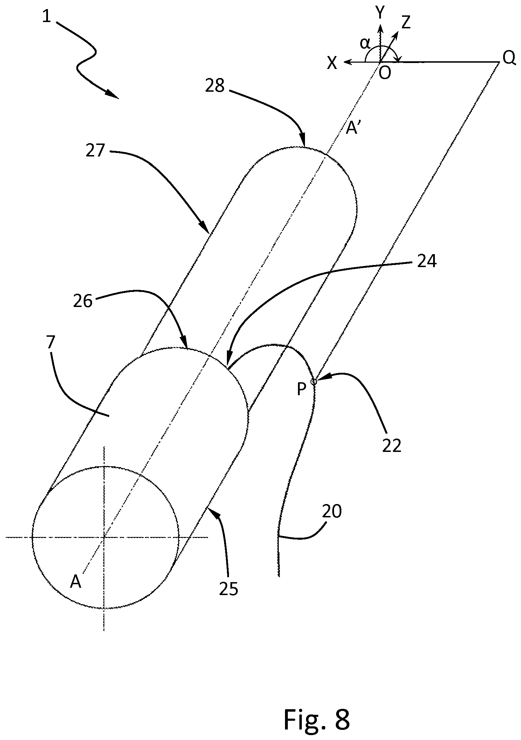

Dans le mode de réalisation représenté sur les figures 4 à 8, la position angulaire $\alpha$ est initialement égale à 0° (figure 3) puis elle augmente progressivement jusqu'à 90° (figure 4), puis jusqu'à 135° (figure 5), puis jusqu'à 150° (figure 6), puis jusqu'à 160° (figure 7) pour finir à 180° (figure 8). Dans ce mode de réalisation particulier, l'amplitude de variation de la position angulaire $\alpha$ pendant le pliage du fil d'armure 20 est donc égale à 180°.

Avantageusement, l'amplitude de variation de la position angulaire $\alpha$ du point d'application P pendant le pliage du fil 20 d'armure est comprise entre 120° et 360°. Préférentiellement, l'amplitude de variation de la position angulaire $\alpha$ du point d'application P pendant le pliage du fil 20 d'armure est comprise entre 150° et 270°.

En outre, avantageusement, la trajectoire du point d'application P est telle que la position axiale z varie de façon monotone en fonction du temps pendant le pliage du fil d'armure 20. Dans le mode de réalisation représenté sur les figures 3 à 8, la position axiale z diminue pendant le pliage du fil d'armure 20.

En outre, avantageusement, l'amplitude de variation de la position axiale z du point d'application P pendant le pliage du fil 20 d'armure est comprise entre le tiers et le double du pas d'hélice H du fil d'armure 20 au sein de la conduite flexible 1.

De plus, selon un mode de réalisation avantageux, la position angulaire $\alpha$ et la position axiale z varient toutes les deux de façon monotone pendant le pliage du fil d'armure 20. Une telle trajectoire a pour avantage de faire varier continument le plan de flexion du fil d'armure 20, et de remonter au mieux le long de l'hélice moyenne suivie initialement par le fil d'armure 20 le long du tronçon dénudé 27.

En effet, une difficulté importante du problème de pliage est que le fil 20 présente à l'origine une géométrie qui n'est pas plane de sorte qu'il n'est pas possible de travailler dans un plan de flexion fixe. Au sein de la conduite flexible 1, avant le retrait des couches externes entourant les nappes d'armures de traction 5, 6, le fil d'armure 20 est disposé en hélice. Le pas d'hélice H de cette hélice est connu puisqu'il a été défini lors de la fabrication de la nappe d'armures correspondante.

Or, il est particulièrement avantageux de déplacer le point d'application P de la force de pliage F de sorte que sa position axiale z et sa position angulaire α varient proportionnellement l'une par rapport à l'autre, de façon similaire à ce que feraient la position axiale et la position angulaire d'un point qui remonterait vers l'arrière en suivant une hélice proche de celle que décrit initialement le fil d'armure 20 le long du tronçon de conduite dénudé 27. En pratique, dans le cas d'une préformation idéale du fil d'armure 20, ces conditions se traduisent par les équations suivantes :

$$z = K \,.\, \alpha \qquad \text{et} \qquad K \approx H\,/360$$

Dans ces équations, la position angulaire α est exprimée en degrés, et les longueurs z et H sont exprimées en mètres. H est le pas de l'hélice décrite par le fil d'armure 20 au sein de la conduite 1. K est le rapport de proportionnalité entre la position axiale z et la position angulaire α du point d'application P. Le rapport de proportionnalité K est préférentiellement choisi égal ou proche de H/360 car cette valeur optimale correspond à celle d'un point remontant le long d'une hélice de pas H.

Cependant, dans le cas notamment d'une préformation imparfaite du fil d'armure 20, l'invention peut avantageusement être mise en œuvre avec un rapport de proportionnalité compris entre la moitié et le triple de la valeur optimale :

$$z = K \,.\, \alpha \qquad \text{et} \qquad (\,H/2\,)/360 < K < (\,3\,H\,)/360$$

Selon cette variante particulièrement avantageuse le point d'application P a tendance à longer l'hélice moyenne initiale que décrit le fil d'armure 20 le long du tronçon dénudé 27 juste après le retrait des couches externes entourant les nappes d'armures 5, 6. Cette caractéristique a pour effet de faciliter le pliage et de le rendre plus reproductible en évitant notamment d'appliquer au fil d'armure 20 des torsions inutiles.

En outre, avantageusement, la trajectoire du point d'application P est telle que la position radiale r du point d'application P augmente d'abord continûment (figures 3, 4, 5) puis diminue ensuite (figures 6, 7, 8). La phase initiale pendant laquelle la position radiale r augmente est celle pendant laquelle le fil d'armure 20 est écarté angulairement de l'axe longitudinal A-A' jusqu'à devenir quasiment perpendiculaire à cet axe. La phase suivante pendant laquelle la position radiale r diminue est celle pendant laquelle le fil d'armure 20 est rabattu vers l'arrière au-delà du plan de coupe 26.

A la fin de l'opération de pliage du fil d'armure 20, le fil d'armure 20 est immobilisé par des moyens du type crochet non représentés sur la figure 8. Lors de cette immobilisation, afin de faciliter le passage du fil d'armure 20 dans le crochet d'immobilisation, la trajectoire du point P d'application peut localement et ponctuellement s'écarter de la trajectoire optimale suivie pendant le pliage, sans que ceci affecte les caractéristiques principales de l'invention.

Ainsi, par exemple, lorsque la position angulaire α du point d'application P a augmenté de façon monotone de 180° pendant le pliage, il se peut qu'elle diminue ensuite de quelques degrés, typiquement de moins de 5°, lors de la phase finale d'immobilisation du fil d'armure 20 dans le crochet d'immobilisation. L'amplitude des déplacements du point d'application P lors du pliage est très supérieure à celle des déplacements lors de la phase finale d'immobilisation, typiquement au moins 30 fois supérieure, si bien que la trajectoire du point d'application P lors de l'immobilisation finale du fil d'armure 20 a une influence négligeable sur l'écrouissage final du fil d'armure à proximité du point de transition 24.

Une fois que le fil d'armure 20 est immobilisé, l'outil d'application 22 est retiré et l'opération est répétée de la même façon pour tous les autres fils de la nappe externe d'armures de traction 6. Une fois l'opération terminée pour tous les fils de la nappe externe d'armures de traction 6, celle-ci peut être répétée de la même façon pour la nappe interne d'armures 5.

La figure 9 représente un outil d'application 22 conforme à la présente invention. Cet outil comporte un corps 30 et des moyens de guidage 37. Les moyens de guidage 37 comportent un manchon de guidage 39 de face interne sensiblement cylindrique entourant le fil d'armure 20. Ce manchon de guidage 39 présente un diamètre intérieur suffisamment grand pour que le fil d'armure 20 puisse non seulement librement glisser à l'intérieur du manchon de guidage 39 parallèlement à son axe longitudinal H6, mais aussi librement tourner à l'intérieur du manchon de guidage 39 selon un axe de rotation confondu avec l'axe longitudinal H6.

Ainsi, par exemple, dans le cas où le fil d'armure 20 présente une section rectangulaire de diagonale Da, le diamètre intérieur Dm du manchon de guidage 39 est avantageusement compris entre une fois et demie et cinq fois la diagonale Da. Ce jeu important entre le fil d'armure 20 et le manchon de guidage 39 permet d'éviter un blocage du fil d'armure 20 dans l'outil d'application 22 pendant le pliage.

Malgré ce jeu important, le fil d'armure 20 reste en permanence en contact avec le manchon de guidage 39 pendant le pliage, du fait notamment du retour élastique du fil d'armure 20. La force F de pliage est transmise du manchon de guidage 39 au fil d'armure 20 grâce à ce contact réparti le long du tronçon d'application 68. Dans le cas où le fil d'armure 20 présente une section rectangulaire, le contact entre le manchon de guidage 37 et le tronçon d'application 68 est généralement localisé sur les arêtes du fil d'armure 20, typiquement sur deux arêtes adjacentes.

La longueur du manchon de guidage 39 mesurée parallèlement à l'axe longitudinal H6 est avantageusement comprise entre une fois et trois fois le diamètre intérieur Dm du manchon de guidage 39, préférentiellement de l'ordre de deux fois le diamètre intérieur Dm. La longueur du manchon de guidage 39 est avantageusement comprise entre 5 centimètres et 20 centimètres.

Le point d'application P de la force F de pliage, tel que défini dans la présente demande, est situé au milieu du tronçon d'application 68 c'est-à-dire à l'intersection de l'axe H6 et d'un plan transverse situé sensiblement à la moitié de la longueur du manchon de guidage 39.

Le corps 30 de l'outil d'application 22 comporte deux paliers 31 solidaires du corps 30 et entourant le manchon de guidage 39. Ces paliers sont coaxiaux et présentent chacun une fente longitudinale de palier 32 de largeur supérieure à la largeur du fil d'armure 20, lesdites fentes longitudinales étant identiques et alignées parallèlement à l'axe des paliers 31. Le manchon de guidage 39 est monté coaxialement à l'intérieur des deux paliers 31.

La liaison mécanique entre d'une part les deux paliers 31 et d'autre part le manchon de guidage 39 est du type pivot, le seul degré de liberté autorisé étant la rotation du manchon de guidage autour l'axe longitudinal commun des paliers 31 et du manchon de guidage 39. En outre, des moyens de verrouillage non représentés sur la figure 9 permettent de bloquer et de débloquer ce degré de liberté en rotation. Le manchon de guidage 39 présente en outre une fente longitudinale de manchon 34 de largeur identique à celle des fentes longitudinales de paliers 32.

Par suite, en début de pliage, il est possible d'introduire le fil d'armure 20 dans l'outil d'application 22 en passant par le côté. A cet effet, on déverrouille d'abord les moyens de verrouillage pour autoriser la rotation du manchon de guidage 39 par rapport aux paliers 31. Ensuite, on fait tourner le manchon de guidage 39 jusqu'à ce que la fente longitudinale de manchon 34 soit alignée avec les fentes longitudinales de paliers 32. Puis, on introduit latéralement le fil d'armure 20 dans le manchon de guidage 39 en le faisant passer à travers ces trois fentes alignées. Ensuite, on tourne le manchon d'un quart de tour et on verrouille les moyens de verrouillage. De la sorte, le fil d'armure 20 est emprisonné à l'intérieur du manchon de guidage 39. En fin de pliage, on retire le fil d'armure 20 de l'outil d'application 22 en passant aussi par le coté de la même façon que pour l'introduction.

L'ensemble constitué par le manchon de guidage 39 et les deux paliers 31 constitue une pince 33 entourant le fil d'armure 20, ladite pince 33 pouvant être ouverte ou fermée pour introduire ou retirer le fil d'armure 20 en passant par le côté.

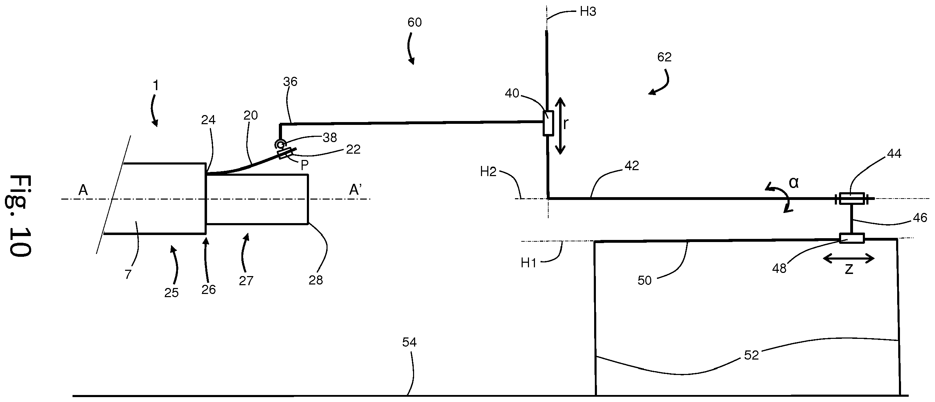

En référence aux figures 9 et 10, on présentera un dispositif 60 de pliage selon un premier mode de réalisation. Ce dispositif comporte des moyens mécaniques de déplacement 62 de l'outil d'application 22. Les moyens mécaniques de déplacement 62 comportent une chaîne d'éléments 52, 46, 42, 36, 35, 30 reliés les uns à la suite des autres, ladite chaîne d'éléments comportant un élément d'extrémité proximale 52 immobile formant une base posée sur le sol 54, et un élément d'extrémité distale 30 mobile et solidaire de l'outil d'application 22. Ces éléments sont reliés entre eux par des liaisons mécaniques 38, 40, 44, 48, 64, 66 présentant au moins un degré de liberté en rotation ou en translation.

Ainsi l'élément d'extrémité distale 52 est relié au deuxième élément 46 par une première liaison mécanique 48 de type glissière selon un axe de translation H1 sensiblement parallèle à l'axe longitudinal A-A' de la conduite tubulaire flexible 1. En outre, le deuxième élément 46 est relié au troisième élément 42 par une deuxième liaison mécanique 44 de type pivot selon un axe de rotation H2 parallèle à H1 et sensiblement coaxial à l'axe longitudinal A-A' de la conduite flexible 1. De plus, le troisième élément 42 est relié au quatrième élément 36 par une troisième liaison mécanique 40 de type glissière selon un axe de translation H3 perpendiculaire et coplanaire à l'axe H2.

La première liaison mécanique 48, la deuxième liaison mécanique 44 et la troisième liaison mécanique 40 sont avantageusement toutes les trois motorisées. Les liaisons mécaniques de type glissière 40,48 sont avantageusement motorisées avec des moteurs électriques asservis accouplés à une transmission de type vis/écrou. La liaison mécanique de type pivot 44 est avantageusement motorisée avec un moteur électrique accouplé à un réducteur mécanique. Ces moteurs électriques et les systèmes de transmission mécanique associés sont bien connus dans le domaine de la robotique industrielle. A l'aide de ces trois moteurs, le quatrième élément 36 peut être déplacé dans l'espace, le premier moteur faisant varier la position axiale z, le deuxième moteur faisant varier la position angulaire $\alpha$ et le troisième moteur faisant varier la position radiale r.

Avantageusement, l'outil d'application 22 n'est pas fixé de façon solidaire au quatrième élément 36, c'est-à-dire qu'il n'est pas encastré au quatrième élément 36. Au contraire, il est avantageux de disposer entre l'outil d'application 22 et le quatrième élément 36 une liaison mécanique intermédiaire non motorisée comportant deux à trois degrés de liberté en rotation, ceci afin de laisser l'outil d'application 22 libre de s'orienter angulairement pour que l'axe du manchon de guidage 39 reste sensiblement parallèle à l'axe longitudinal H6 du fil d'armure 20 au niveau du tronçon d'application 68. L'effet technique associé est d'éviter d'appliquer au fil d'armure 20 des contraintes inutiles pour le pliage.

Selon une première variante du premier mode de réalisation du dispositif 60, cette liaison intermédiaire non motorisée est une quatrième liaison mécanique 38 de type rotule, comme représenté à la figure 10.

Selon une deuxième variante représentée à la figure 9, le quatrième élément 36 est relié à un cinquième élément 35 par l'intermédiaire d'une quatrième liaison mécanique 66 de type pivot selon un axe de rotation H4. Ce cinquième élément 35 est aussi relié à l'élément d'extrémité distale 30 solidaire de l'outil d'application 22 par l'intermédiaire d'une cinquième liaison mécanique 64 de type pivot selon un axe de rotation H5 perpendiculaire et coplanaire à l'axe H4. La quatrième liaison mécanique 66 et la cinquième liaison mécanique 64 sont toutes les deux non motorisées.

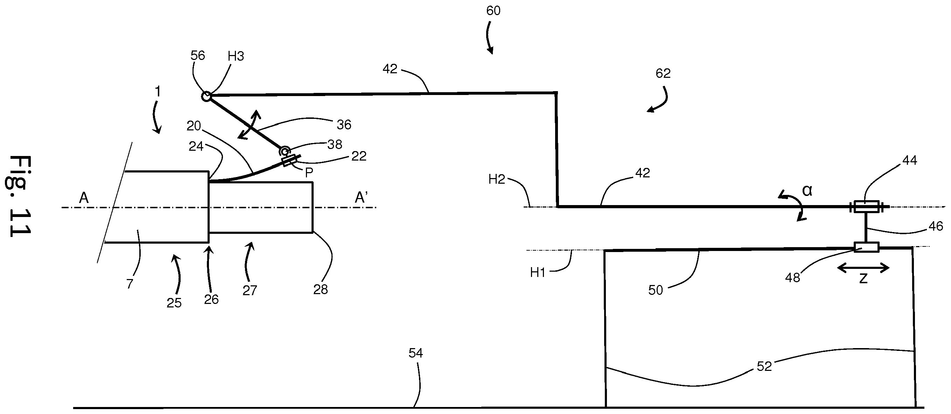

Le deuxième mode de réalisation du dispositif 60, qui est représenté à la figure 11, se distingue essentiellement du premier mode de réalisation par la nature de la troisième liaison mécanique. Selon ce deuxième mode, le troisième élément 42 est relié au quatrième élément 36 grâce à une troisième liaison mécanique 56 de type pivot d'axe de rotation H3. L'axe de rotation H3 est compris dans un plan perpendiculaire à l'axe H2, et sensiblement tangentiel à un cylindre ayant pour axe l'axe H2 et pour rayon la distance séparant l'emplacement de la troisième liaison mécanique 56 de l'axe H2. Cette troisième liaison mécanique 56 est motorisée, avantageusement avec un moteur électrique asservi.

Le dispositif 60 selon ce deuxième mode de réalisation présente l'avantage d'être moins encombrant et plus simple mécaniquement que celui du premier mode, mais il est un peu plus complexe à piloter que celui selon le premier mode. En effet, dans le premier mode de réalisation, les positions axiale z, angulaire $\alpha$ et radiale r de l'outil d'application 22 dépendent chacune d'un seul des trois moteurs, ce qui facilite le pilotage des déplacements de l'outil d'application 22. Par contre, dans le deuxième mode de réalisation seule la position angulaire $\alpha$ dépend d'un seul moteur, les positions axiale z et radiale r dépendant toutes les deux de deux moteurs, ce qui complique légèrement le pilotage sans pour autant poser un réel problème dès lors que le système de contrôle des moteurs est équipé de moyens de moyens de calcul en temps réel.

Avantageusement les moyens mécaniques de déplacement 62 constituent un robot de co-manipulation piloté par un opérateur. Ce robot fournit la plus grande partie de la puissance mécanique nécessaire au pliage, par exemple 90% de la puissance, le reste étant fourni par l'opérateur via au moins un organe de commande couplé mécaniquement à au moins un des éléments. Ce type de robot de co-manipulation est similaire à un robot piloté à distance à l'aide d'une commande à retour de force, la particularité étant que l'effort mécanique exercé par l'opérateur sur la commande est aussi transmis directement au robot par des moyens mécaniques. L'emploi d'un robot de co-manipulation permettant d'amplifier les efforts de l'opérateur d'un facteur supérieur ou égal à 10 permet de résoudre le problème pénibilité du pliage des fils.

L'organe de commande est préférentiellement constitué d'un volant d'axe H2 couplé mécaniquement au troisième élément 42 par l'intermédiaire de capteurs mesurant les efforts exercés par l'opérateur. Ces capteurs sont reliés au système de contrôle des moteurs qui calcule et applique en temps réel les paramètres de contrôle des moteurs permettant d'amplifier les efforts exercés par l'opérateur. Selon cette variante avantageuse, la rotation du volant de commande détermine directement la position angulaire $\alpha$ de l'outil d'application 22, tandis que la translation du volant parallèlement à l'axe H2 détermine la position axiale z, la position radiale r étant soit pilotée manuellement à partir d'une autre commande, soit déterminée automatiquement pour suivre une trajectoire prédéfinie.

La trajectoire optimale de l'outil d'application 22 pendant le pliage est d'abord déterminée par l'opérateur sur un des fils d'armure 20 de la nappe d'armures de traction 5,6. Lors de cette phase de réglage, l'opérateur peut librement déplacer l'outil d'application 22 en bénéficiant de la fonction d'amplification de puissance mécanique. Ensuite, un fois ce réglage effectué, le robot de co-manipulation peut reproduire cette trajectoire optimale pour tous les autres fils de la nappe d'armure en incrémentant simplement la position angulaire a. Les phases complexes de mise en place de l'outil d'application 22 avant le pliage, et d'immobilisation du fil d'armure 20 dans le crochet d'immobilisation en fin de pliage sont quant à elles pilotées manuellement mais grandement facilitées grâce l'amplification de puissance mécanique dont bénéficie l'opérateur.

Le même dispositif 60 est aussi utilisé pour déplier les fils des nappes d'armures 5,6 vers l'avant après montage de la voûte d'extrémité 11, selon une méthode inversée par rapport à celle utilisée pour le pliage vers l'arrière. Ainsi, pour le dépliage vers l'avant, l'outil d'application 22 est d'abord positionné autour du fil d'armure 20 à proximité du crochet d'immobilisation situé près du point de transition 24. Ensuite le fil est libéré du crochet d'immobilisation et le dépliage vers l'avant est effectué en faisant parcourir à l'outil d'application 22 une trajectoire inversée par rapport à celle décrite lors du pliage vers l'arrière. Ainsi, lors du dépliage vers l'avant, l'outil d'application 22 glisse le long du fil d'armure 20 en s'éloignant du point de transition 24, et en se rapprochant du point de l'extrémité 29.

La présente invention pourrait aussi être mise en œuvre avec un dispositif motorisé avec des actionneurs hydrauliques, ou encore avec un dispositif non motorisé utilisant uniquement la puissance mécanique de l'opérateur, mais réduisant la pénibilité grâce à des systèmes de transmission amplifiant les efforts appliqués par l'opérateur aux organes de commande.

**Revendications**

1. Méthode de montage d'un embout de connexion (10) d'une conduite tubulaire flexible (1) pour le transport d'un fluide en milieu marin, ladite conduite (1) étant du type non-lié et comprenant notamment une gaine de pression (3) interne et au moins une nappe d'armures de traction (5, 6) enroulées à pas long autour de la gaine de pression (3), ladite méthode comportant les étapes suivantes :

   a) on fournit une conduite flexible (1) comportant une extrémité de conduite (28) sur laquelle l'embout de connexion (10) doit être monté,
   b) on forme un tronçon de conduite dénudé (27) au niveau de ladite extrémité de conduite (28) en retirant la ou les couches externes entourant ladite au moins une nappe d'armures de traction (5,6),
   c) on plie vers l'arrière de la conduite flexible (1) chaque fil d'armure (20) de ladite au moins une nappe d'armures de traction en appliquant à chaque fil d'armure (20) une force F de pliage,
   d) on raccorde ledit embout de connexion (10) à ladite extrémité de conduite (28), ladite méthode étant **caractérisée en ce que** pendant l'étape c) ladite force de pliage F est appliquée à chaque fil d'armure (20) par l'intermédiaire d'un outil d'application (22) apte à pouvoir glisser le long du fil (20) et **en ce que** pendant l'étape c) le point d'application P de ladite force de pliage F se déplace continûment le long dudit fil d'armure (20) en se rapprochant progressivement du point de transition (24) voisin de la zone de pliage du fil (20).

2. Méthode de montage d'un embout de connexion (10) selon la revendication 1, **caractérisée en ce que** pendant l'étape c), la position angulaire $\alpha$ dudit point d'application P varie de façon monotone en fonction du temps, ladite position angulaire $\alpha$ étant mesurée dans un plan perpendiculaire à l'axe longitudinal A-A' de ladite conduite flexible (1).

3. Méthode de montage d'un embout de connexion (10) selon la revendication 1 ou 2, **caractérisée en ce que** pendant l'étape c), l'amplitude de variation de ladite position angulaire $\alpha$ dudit point d'application P est comprise entre 120 degrés et 360 degrés.

4. Méthode de montage d'un embout de connexion (10) selon l'une quelconque des revendications 1 à 3, **caractérisée en ce que** pendant l'étape c), la position axiale z dudit point d'application P varie de façon monotone en fonction du temps, ladite position axiale z étant mesurée parallèlement à l'axe longitudinal A-A' de ladite conduite flexible (1).

5. Méthode de montage d'un embout de connexion (10) selon l'une quelconque des revendications 1 à 4, **caractérisée en ce que** pendant l'étape c), l'amplitude de variation de ladite position axiale z dudit point d'application P est comprise entre le tiers et le double du pas d'hélice H du fil d'armure (20) au sein de la conduite flexible (1).

6. Méthode de montage d'un embout de connexion (10) selon l'une quelconque des revendications 1 à 5, **caractérisée en ce que** pendant l'étape c), la position radiale r dudit point d'application P varie en fonction du temps selon une courbe comportant d'abord une phase d'augmentation de ladite position radiale r jusqu'à une valeur maximale suivie ensuite d'une phase de diminution de ladite position radiale r, ladite position radiale r étant égale à la distance séparant ledit point d'application P de l'axe longitudinal A-A' de ladite conduite flexible (1).

7. Dispositif (60) permettant de plier vers l'arrière un fil d'armure (20) d'une conduite tubulaire flexible (1) d'axe longitudinal A-A' selon la revendication 1, **caractérisé en ce que** ledit dispositif (60) comporte un outil d'application (22) d'une force de pliage F en un point P dudit fil d'armure (20), et des moyens mécaniques de déplacement (62) de l'outil d'application (22), ledit outil d'application (22) comportant des moyens de guidage (37) permettant audit outil d'application (22) de glisser le long dudit fil d'armure (20) pendant l'application de la force de pliage F, en se rapprochant progressivement du point de transition (24) voisin de la zone de pliage du fil (20), et **en ce que** lesdits moyens mécaniques de déplacement (62) comportent une chaîne d'éléments (52, 46, 42, 36, 35, 30) reliés les uns à la suite des autres, ladite chaîne d'éléments (52, 46, 42, 36, 35, 30) comportant un élément d'extrémité proximale (52) immobile formant une base, et un élément d'extrémité distale (30) mobile solidaire dudit outil d'application (22), lesdits éléments étant reliés entre eux par des liaisons mécaniques (38, 40, 44, 48, 56, 64, 66) présentant au moins un degré de liberté en rotation ou en translation, lesdits moyens de déplacement (62) comportant quatre éléments et trois liaisons mécaniques motorisées (40, 44, 48, 56), ledit dispositif (60) permettant de déplacer ledit outil d'application (22) selon une trajectoire tridimensionnelle.

8. Dispositif (60) selon la revendication 7, **caractérisé en ce que** lesdits moyens de guidage (37) laissent ledit outil d'application (22) libre de tourner autour dudit fil d'armure (20) pendant l'application de la force de pliage F.

9. Dispositif (60) selon la revendication 7 ou 8, **caractérisé en ce que** ledit outil d'application (22) comporte une pince (33) entourant le fil d'armure (20).

10. Dispositif (60) selon l'une quelconque des revendications 7 à 9, **caractérisé en ce que** lesdites liaisons mécaniques motorisées (38, 40, 44, 48, 56) sont des liaisons de type glissière ou de type pivot.

11. Dispositif (60) selon l'une quelconque des revendications 7 à 10, caractérisé lesdits moyens mécaniques de déplacement (62) comportent une liaison mécanique motorisée de type pivot (44) d'axe de rotation (H2) sensiblement confondu avec l'axe longitudinal A-A' de ladite conduite tubulaire flexible (1).

12. Dispositif (60) selon l'une quelconque des revendications 7 à 11, **caractérisé en ce que** lesdits moyens mécaniques de déplacement (62) comportent six desdits éléments (52, 46, 42, 36, 35, 30) et cinq desdites liaisons mécaniques (38, 40, 44, 48, 56, 64, 66), deux desdites cinq liaisons mécaniques étant des liaisons mécaniques non motorisées de type pivot (64, 66).

13. Dispositif (60) selon l'une quelconque des revendications 7 à 12, **caractérisé en ce que** lesdits moyens mécaniques de déplacement (62) sont un robot de co-manipulation piloté par un opérateur.

**Patentansprüche**

1. Verfahren zur Montage eines Anschlussendstücks (10) einer flexiblen rohrförmigen Leitung (1) für den Transport eines Fluids in einer Meeresumgebung, wobei die Leitung (1) des nicht verbundenen Typs ist und insbesondere einen inneren Druckmantel (3) und wenigstens eine Schicht aus Zugbewehrungen (5, 6), die mit großer Gangart um den inneren Dichtungsmantel (3) gewickelt ist, umfasst, wobei das Verfahren die folgenden Schritte aufweisend:

   a) Bereitstellen einer flexiblen Leitung (1), die ein Leitungsende (28) aufweist, auf dem das Anschlussendstück (10) montiert werden soll,
   b) Bilden eines freigelegten Leitungsabschnitts (27) im Bereich des Leitungsendes (28), indem die äußere(n) Schicht(en), welche die wenigstens eine Schicht aus Zugbewehrungen (5, 6) umgibt (umgeben), entfernt wird (werden),
   c) Biegen jedes Bewehrungsdrahtes (20) der wenigstens einen Schicht aus Zugbewehrungen zu der hinteren Seite der flexiblen Leitung (1) hin, indem auf jeden Bewehrungsdraht (20) eine Biegekraft F aufgebracht wird,
   d) Anschließen des Anschlussendstücks (10) an das Leitungsende (28),
   wobei das Verfahren **dadurch gekennzeichnet ist, dass** während des Schrittes c) die Biegekraft F auf jeden Bewehrungsdraht (20) mittels eines Aufbringungswerkzeugs (22) aufgebracht wird, das in der Lage ist, entlang des Drahtes (20) zu gleiten, und dadurch dass während des Schrittes c) der Aufbringungspunkt P der Biegekraft F sich durchgehend entlang des Bewehrungsdrahts (20) bewegt, indem er sich schrittweise dem Übergangspunkt (24) nahe der Biegezone des Drahtes (20) nähert.

2. Verfahren zur Montage eines Anschlussendstücks (10) nach Anspruch 1, **dadurch gekennzeichnet, dass** während des Schrittes c) die Winkelposition $\alpha$ des Aufbringungspunktes P in Abhängigkeit von der Zeit monoton variiert, wobei die Winkelposition $\alpha$ in einer Ebene senkrecht zu der Längsachse A-A' der flexiblen Leitung (1) gemessen wird.

3. Verfahren zur Montage eines Anschlussendstücks (10) nach Anspruch 1 oder 2, **dadurch gekennzeichnet, dass** während des Schrittes c) die Variationsbreite der Winkelposition $\alpha$ des Aufbringungspunktes P zwischen 120 Grad und 360 Grad beträgt.

4. Verfahren zur Montage eines Anschlussendstücks (10) nach einem der Ansprüche 1 bis 3, **dadurch gekennzeichnet, dass** während des Schrittes c) die axiale Position z des Aufbringungspunktes P in Abhängigkeit von der Zeit monoton variiert, wobei die axiale Position z parallel zu der Längsachse A-A' der flexiblen Leitung (1) gemessen wird.

5. Verfahren zur Montage eines Anschlussendstücks (10) nach einem der Ansprüche 1 bis 4, **dadurch gekennzeichnet, dass** während des Schrittes c) die Variationsbreite der axialen Position z des Aufbringungspunktes P zwischen einem Drittel und dem Zweifachen des Schraubengangs H des Bewehrungsdrahts (20) im Inneren der flexiblen Leitung (1) beträgt.

6. Verfahren zur Montage eines Anschlussendstücks (10) nach einem der Ansprüche 1 bis 5, **dadurch gekennzeich-**

**net, dass** während des Schrittes c) die radiale Position r des Aufbringungspunktes P in Abhängigkeit von der Zeit gemäß einer Kurve variiert, die zunächst eine Phase der Erhöhung der radialen Position r bis zu einem Höchstwert gefolgt von einer Phase der Verminderung der radialen Position r aufweist, wobei die radiale Position r gleich dem Abstand ist, der den Aufbringungspunkt P von der Längsachse A-A' der flexiblen Leitung (1) trennt.

7.  Vorrichtung (60) zum Biegen eines Bewehrungsdrahts (20) einer flexiblen Rohrleitung (1) mit Längsachse A-A' nach hinten nach Anspruch 1, **dadurch gekennzeichnet, dass** die Vorrichtung (60) ein Werkzeug zum Aufbringen (22) einer Biegekraft F in einem Punkt P des Bewehrungsdrahts (20) und mechanische Mittel (62) zum Bewegen des Aufbringungswerkzeugs (22) aufweist, wobei das Aufbringungswerkzeug (22) Führungsmittel (37) aufweist, die dem Aufbringungswerkzeug (22) gestatten, während der Aufbringung der Biegekraft F entlang des Bewehrungsdrahts (20) zu gleiten, indem sie sich schrittweise dem Übergangspunkt (24) nahe der Biegezone des Drahtes (20) nähern, und dadurch dass die mechanischen Bewegungsmittel (62) eine Kette von Elementen (52, 46, 42, 36, 35, 30) aufweisen, die hintereinander verbunden sind, wobei die Kette von Elementen (52, 46, 42, 36, 35, 30) ein feststehendes proximales Endelement (52), das eine Basis bildet, und ein bewegliches distales Endelement (30), das mit dem Aufbringungswerkzeug (22) fest verbunden ist, aufweist, wobei die Elemente über mechanische Verbindungen (38, 40, 44, 48, 56, 64, 66) miteinander verbunden sind, die wenigstens einen Freiheitsgrad in Rotation oder Translation aufweisen, wobei die Bewegungsmittel (62) vier Elemente und drei motorbetriebene mechanische Verbindungen (40, 44, 48, 56) aufweisen, wobei die Vorrichtung (60) gestattet, das Aufbringungswerkzeug (22) gemäß einer dreidimensionalen Bahn zu bewegen.

8.  Vorrichtung (60) nach Anspruch 7, **dadurch gekennzeichnet, dass** die Führungsmittel (37) zulassen, dass sich das Aufbringungswerkzeug (22) während der Aufbringung der Biegekraft F frei um den Bewehrungsdraht (20) dreht.

9.  Vorrichtung (60) nach Anspruch 7 oder 8, **dadurch gekennzeichnet, dass** das Aufbringungswerkzeug (22) eine Klemmzange (33) aufweist, die den Bewehrungsdraht (20) umgibt.

10. Vorrichtung (60) nach einem der Ansprüche 7 bis 9, **dadurch gekennzeichnet, dass** die motorbetriebenen mechanischen Verbindungen (38, 40, 44, 48, 56) Verbindungen des Gleitführungstyps oder Drehzapfentyps sind.

11. Vorrichtung (60) nach einem der Ansprüche 7 bis 10, **dadurch gekennzeichnet, dass** die mechanischen Bewegungsmittel (62) eine motorbetriebene mechanische Verbindung des Drehzapfentyps (44) mit Rotationsachse (H2), die mit der Längsachse A-A' der flexiblen rohrförmigen Leitung (1) im Wesentlichen zusammenfällt, aufweisen.

12. Vorrichtung (60) nach einem der Ansprüche 7 bis 11, **dadurch gekennzeichnet, dass** die mechanischen Bewegungsmittel (62) sechs Elemente (52, 46, 42, 36, 35, 30) und fünf mechanische Verbindungen (38, 40, 44, 48, 56, 64, 66) aufweisen, wobei zwei mechanische Verbindungen nicht motorbetriebene mechanische Verbindungen des Drehzapfentyps (64, 66) sind.

13. Vorrichtung (60) nach einem der Ansprüche 7 bis 12, **dadurch gekennzeichnet, dass** die mechanischen Bewegungsmittel (62) ein Comanipulationsroboter sind, der durch einen Bediener gesteuert wird.

**Claims**

1.  A method for mounting a connecting end fitting (10) of a tubular flexible pipe (1) for conveying a fluid in a marine environment, said pipe (1) being an unbonded pipe and comprising in particular an internal pressure sheath (3) and at least one tensile armor layer (5, 6) wound with a long pitch around the pressure sheath (3), said method comprising the following steps:

    a) a flexible pipe (1) is provided having a pipe end (28) on which the connecting end fitting (10) is to be mounted,
    b) a stripped pipe portion (27) is formed at said pipe end (28) by removing the outer layer or layers surrounding said at least one tensile armor layer (5,6),
    c) each armor wire (20) of said at least one tensile armor layer is bent, toward the rear of the flexible pipe (1), by applying a bending force F to each armor wire (20),
    d) said connecting end fitting (10) is connected to said pipe end (28),
    said method being **characterized in that** in step c), said bending force F is applied to each armor wire (20) by means of an application tool (22) which is capable of sliding along the wire (20) and **in that** in step c), the point of application P of said bending force F moves continuously along said armor wire (20) by gradually moving closer to the point of transition (24) in the vicinity of the zone of bending of the wire (20).

2. The method for mounting a connecting end fitting (10) as claimed in claim 1, **characterized in that** in step c), the angular position $\alpha$ of said point of application P varies monotonically with time, said angular position $\alpha$ being measured in a plane perpendicular to the longitudinal axis A-A' of said flexible pipe (1).

3. The method for mounting a connecting end fitting (10) as claimed in any one of claims 1 or 2, **characterized in that** in step c), the amplitude of variation of said angular position $\alpha$ of said point of application P is between 120 degrees and 360 degrees.

4. The method for mounting a connecting end fitting (10) as claimed in any one of claims 1 to 3, **characterized in that** in step c), the axial position z of said point of application P varies monotonically with time, said axial position z being measured parallel to the longitudinal axis A-A' of said flexible pipe (1).

5. The method for mounting a connecting end fitting (10) as claimed in any one of claims 1 to 4, **characterized in that** in step c), the amplitude of variation of said axial position z of said point of application P is between one third and twice the helical pitch H of the armor wire (20) within the flexible pipe (1).

6. The method for mounting a connecting end fitting (10) as claimed in any one of claims 1 to 5, **characterized in that** in step c), the radial position r of said point of application P varies with time according to a curve comprising, first, a phase of increase of said radial position r up to a maximum value, followed by a phase of decrease of said radial position r, said radial position r being equal to the distance separating said point of application P from the longitudinal axis A-A' of said flexible pipe (1).

7. A device (60) for rearward bending of an armor wire (20) of a tubular flexible pipe (1) of longitudinal axis A-A' as claimed in claim 1, **characterized in that** said device (60) comprises an application tool (22) for applying a bending force F to a point P of said armor wire (20), and mechanical movement means (62) for moving the application tool (22), said application tool (22) comprising guide means (37) enabling said application tool (22) to slide along said armor wire (20) while the bending force F is being applied by gradually moving closer to the point of transition (24) in the vicinity of the zone of bending of the wire (20),
and **characterized in that** said mechanical movement means (62) comprise a chain of elements (52, 46, 42, 36, 35, 30) connected one after the other, said chain of elements (52, 46, 42, 36, 35, 30) comprising a stationary proximal end element (52) forming a base and a movable distal end element (30) rigidly secured to said application tool, (22), said elements being connected to one another by mechanical connections (38, 40, 44, 48, 56, 64, 66) having at least one degree of freedom in rotation or in translation, said movement means (62) comprising four elements and three motorized mechanical connections, (40, 44, 48, 56), said device (60) making it possible to move said application tool (22) along a three-dimensional trajectory.

8. The device (60) as claimed in claim 7, **characterized in that** said guide means (37) allow said application tool (22) to freely rotate about said armor wire (20) while the bending force F is being applied.

9. The device (60) as claimed in claim 7 or 8, **characterized in that** said application tool (22) comprises a clamp (33) surrounding the armor wire (20).

10. The device (60) as claimed in any one of claims 7 to 9, **characterized in that** said motorized mechanical connections (38, 40, 44, 48, 56) are sliding or pivoting connections.

11. The device (60) as claimed in any one of claims 7 to 10, **characterized in that** said mechanical movement means (62) comprise a motorized pivoting mechanical connection (44) with an axis of rotation (H2) substantially coincident with the longitudinal axis A-A' of said tubular flexible pipe (1).

12. The device (60) as claimed in any one of claims 7 to 11, **characterized in that** said mechanical movement means (62) comprise six of said elements (52, 46, 42, 36, 35, 30) and five of said mechanical connections (38, 40, 44, 48, 56, 64, 66), two of said five mechanical connections being non-motorized pivoting mechanical connections (64, 66).

13. The device (60) as claimed in any one of claims 7 to 12, **characterized in that** said mechanical movement means (62) are a co-manipulation robot controlled by an operator.

Fig. 1

Fig. 2

Fig. 3

Fig. 4

Fig. 5

Fig. 6

Fig. 7

Fig. 8

Fig. 9

Fig. 10

Fig. 11

**EP 3 230 640 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03004921 A
- WO 2014170644 A
- US 1211020 A
- US 2013091921 A
- GB 2346575 A